# EUROPÄISCHE PATENTANMELDUNG

(11) **EP 4 800 914 A1**
(43) Veröffentlichungstag der Anmeldung: **02.09.2026**
(21) Anmeldenummer: 25160837.8
(22) Anmeldetag: 28.02.2025
(51) Int. Cl.: H02P 9/00, H02K 17/42

(54) **VORRICHTUNG UND VERFAHREN ZUR UMWANDLUNG VON BEWEGUNGSENERGIE IN ELEKTRISCHE ENERGIE**

(71) Anmelder: Szerencsics, Gottfried, 2486 Landegg (AT)
(72) Erfinder: Szerencsics, Gottfried, 2486 Landegg (AT)
(74) Vertreter: Haas, Stephan

(57) **Zusammenfassung**

Erfindungsgemäß ist eine Vorrichtung zur Umwandlung von Bewegungsenergie in elektrische Energie, umfassend einen Frequenztransformator (1), der zumindest einen Stator (6) und einen Rotor (5) aufweist, einen Drehstrom-Asynchron-Motor (2) sowie einen Drehstrom-Synchron-Generator (3), der mit einem Stromnetz (7) verbindbar ist, wobei zumindest ein Stator (6, 16, 18) des Frequenztransformators (1) mit dem Stromnetz (7) verbindbar ist, der Rotor (5, 15, 17) des Frequenztransformators (1) mit einer antreibbaren Welle (8) verbunden ist, und der Frequenztransformator (1) derart mit dem Drehstrom-Asynchron-Motor (2) verbunden ist, dass der Drehstrom-Asynchron-Motor (2) durch den Frequenztransformator (1) antreibbar ist, wobei ein Rotor des Drehstrom-Asynchron-Motors (2) fest mit einem Rotor des Drehstrom-Synchron-Generators (3) verbunden ist sowie ein Verfahren zur Umwandlung von Bewegungsenergie in elektrische Energie vorgesehen.

## Beschreibung

Die Erfindung betrifft eine Vorrichtung sowie ein Verfahren zur Umwandlung von Bewegungsenergie in elektrische Energie.

Aus dem Stand der Technik sind verschiedene Möglichkeiten zur Umwandlung von Bewegungsenergie (kinetischer Energie) in elektrische Energie bekannt. Zur Bereitstellung von kinetischer Energie werden bspw. Windturbinen, Wasserturbinen oder Dampfturbinen genutzt, die das Abfallen der inneren Energie eines strömenden Fluides (Flüssigkeit oder Gas) in mechanische Rotationsenergie umwandeln, sodass eine mit der Turbine verbundene Welle gedreht wird. Diese Bewegungsenergie wird anschließend mithilfe eines Generators in elektrische Energie umgewandelt und zur Verfügung gestellt. Insbesondere bei Windturbinen und Wasserturbinen besteht das Problem, dass die durch Wind oder Wasser bereitgestellte Bewegungsenergie im Betrieb großen Schwankungen unterworfen ist und die Welle oftmals nur sehr langsam gedreht wird, wenn das Angebot an Wind oder Wasser gering ist. Die Erzeugung von elektrischer Spannung verringert sich mit der Drehzahl des an die Welle der Turbine angeschlossenen Generators, wodurch der Generator nicht ohne weiteres an das zu versorgende Netz angeschlossen werden kann. Ab einer gewissen Drehzahlgrenze können die bekannten Vorrichtungen nicht mehr effizient arbeiten und müssen daher temporär abgeschaltet werden.

Um dieses Problem zu lösen bzw. zu verringern, kann bspw. ein Generator mit sehr großem Durchmesser verwendet werden, wodurch die magnetischen Kraftlinien im Generator mit größerer Geschwindigkeit geschnitten werden, oder es kann ein Zahnradgetriebe genutzt werden, um die Drehzahl des Generators zu erhöhen. In beiden Fällen muss die mechanische Regelung der Turbine für die richtige Drehzahl sorgen. Eine weitere Alternative ist es, dass der vom Generator bereitgestellte Strom gleichgerichtet wird und der Gleichstrom anschließend einem elektronischen Wechselrichter zugeführt wird, bevor er ins Stromnetz eingespeist wird. Diese Vorrichtungen lösen die bei geringer Turbinenbewegung auftretenden Probleme allerdings nicht bzw. nur teilweise und sind darüber hinaus komplex aufgebaut.

Es ist daher eine Aufgabe der Erfindung, eine Vorrichtung und ein Verfahren der eingangs genannten Art bereitzustellen, die die oben genannten Nachteile zumindest teilweise überwinden. Insbesondere soll eine Vorrichtung sowie ein Verfahren bereitgestellt werden, die eine effiziente Umwandlung von Bewegungsenergie in elektrische Energie auch bei schlechten Betriebsbedingungen, insbesondere einem geringen Angebot an Wind oder Wasser, ermöglichen. Bevorzugt soll die erfindungsgemäße Vorrichtung und das erfindungsgemäße Verfahren weiters die Synchronisation beim Verbinden der Vorrichtung mit dem Netz erleichtern und helfen, Stromspitzen zu vermeiden.

Erfindungsgemäß ist eine Vorrichtung zur Umwandlung von Bewegungsenergie in elektrische Energie vorgesehen, umfassend einen Frequenztransformator, der zumindest einen Stator und einen Rotor aufweist, einen Drehstrom-Asynchron-Motor sowie einen Drehstrom-Synchron-Generator, der mit einem Stromnetz verbindbar ist, wobei zumindest ein Stator des Frequenztransformators mit dem Stromnetz verbindbar ist, der Rotor des Frequenztransformators mit einer antreibbaren Welle verbunden ist, und der Frequenztransformator derart mit dem Drehstrom-Asynchron-Motor verbunden ist, dass der Drehstrom-Asynchron-Motor durch den Frequenztransformator antreibbar ist, wobei ein Rotor des Drehstrom-Asynchron-Motors fest mit einem Rotor des Drehstrom-Synchron-Generators verbunden ist.

Der Frequenztransformator ist derart ausgebildet, dass bei Drehung einer mit dem Frequenztransformator verbundenen Welle ein eingangsseitig anliegender Strom, bspw. aus einem Stromnetz, eine andere Frequenz aufweist als ein ausgangsseitiger Strom. Die Frequenz des Stroms wird also durch den Frequenztransformator verändert. Zum Antrieb des Drehstrom-Asynchron-Motors versorgt der Frequenztransformator im Betrieb den Drehstrom-Asynchron-Motor mit dem ausgangsseitigen Strom.

Im Betrieb ist der Stator des Frequenztransformators mit dem Stromnetz, das versorgt werden soll, verbunden. Die antreibbare Welle steht vor der eigentlichen Inbetriebnahme still. In einer Statorwicklung des Frequenztransformators wird ein Statordrehfeld erzeugt, welches in der Rotorwicklung eine Flussänderung bewirkt und damit eine Spannung induziert. Solange sich die Welle nicht dreht, wirkt der Frequenztransformator wie ein Transformator und an den Ausgängen des Frequenztransformators, die mit dem Drehstrom-Asynchron-Motor verbunden sind, kann (Dreh-)Strom mit der Frequenz des angeschlossenen Stromnetzes abgenommen werden. Wird nunmehr die mit dem Rotor verbundene Welle gedreht, so ändert sich die Frequenz des durch den Frequenztransformator an den Ausgängen bereitgestellten Stromes. Die Frequenz des bereitgestellten Stromes ist abhängig von der Drehzahl und der Polzahl des Frequenztransformators. Der Drehsinn des Feldes im Stator des Frequenztransformators ist so gewählt, dass die Frequenz des durch den Frequenztransformator bereitgestellten Stromes höher ist als die Frequenz des mit dem Frequenztransformator verbundenen Stromnetzes. Der Drehstrom-Asynchron-Motor wird also mit Strom betrieben, der eine höhere Frequenz aufweist als das Stromnetz.

Da der Drehstrom-Synchron-Generator nicht direkt mit der Turbine bzw. der antreibbaren Welle gekoppelt ist, kann sich der Drehstrom-Synchron-Generator deutlich schneller drehen als die antreibbare Welle selbst. Die antreibbare Welle ist bevorzugt mit einer Turbine, bspw. eine Windturbine oder eine Wasserturbine, verbunden, sodass die antreibbare Welle durch die Turbine in Drehung versetzt werden kann.

Der durch den Frequenztransformator bereitgestellte Strom wird dem Drehstrom-Asynchron-Motor zugeführt, wodurch sich der Rotor des Drehstrom-Asynchron-Motors und damit auch der Rotor des Drehstrom-Synchron-Generators dreht. Der Drehstrom-Synchron-Generator ist seinerseits mit dem Stromnetz verbunden und der Rotor des Drehstrom-Synchron-Generators dreht sich daher maximal mit der Frequenz des Stromnetzes. Da der Drehstrom-Asynchron-Motor mit dem Drehstrom-Synchron-Generator verbunden ist, dreht sich der Rotor des Drehstrom-Asynchron-Motors im laufenden Betrieb ebenfalls mit der Frequenz des Stromnetzes (Synchrondrehzahl), welche kleiner ist als die Frequenz des dem Drehstrom-Asynchron-Motor durch den Frequenztransformator zugeführten Stroms. Aufgrund der unterschiedlichen Geschwindigkeit des Statordrehfeldes und des Rotordrehfeldes wird im Rotor des Drehstrom-Asynchron-Motors ein Kurzschlussstrom geringer Frequenz erzeugt. Der Unterschied zwischen der Drehzahl des Drehstrom-Synchron-Generators und damit der Drehzahl des Rotors des Drehstrom-Asynchron-Motors und der Drehzahl des Statordrehfeldes des Drehstrom-Asynchron-Motors stellt den Schlupf des Drehstrom-Asynchron-Motors dar.

Der Drehstrom-Asynchron-Motor kann bspw. ein Kurzschluss- oder Käfigläufer oder ein Schleifringläufer sein. Der Drehstrom-Synchron-Generator kann bspw. eine Vollpolmaschine, eine Schenkelpolmaschine oder eine Klauenpolmaschine sein. Der Drehstrom-Asynchron-Motor und der Drehstrom-Synchron-Generator sind fest miteinander verbunden, sodass die Drehung des Drehstrom-Asynchron-Motors die Drehung des Drehstrom-Synchron-Generators bedingt und umgekehrt. Die Verbindung kann bspw. über eine gemeinsame Welle oder eine Kupplung erfolgen.

Da der Drehstrom-Synchron-Generator nicht direkt mit der antreibbaren Welle verbunden ist, müssen der Drehstrom-Synchron-Generator und der Drehstrom-Asynchron-Motor nicht in der Nähe der Welle und damit nicht in der Nähe einer mit der Welle fest verbundenen Turbine angeordnet sein. Dies ermöglicht es, dass der Drehstrom-Synchron-Generator und der Drehstrom-Asynchron-Motor bspw. nicht in der Gondel einer Windkraftanlage angeordnet sein müssen, sondern auch in der Basis der Windkraftanlage angeordnet sein können. Hierdurch wird eine größere Flexibilität bei der Anordnung ermöglicht.

Bevorzugt ist vorgesehen, dass die Polzahl des Drehstrom-Asynchron-Motors und die Polzahl des Drehstrom-Synchron-Generators gleich sind. Hierdurch wird ein ruhigerer Lauf der beiden Maschinen erzielt.

Bevorzugt ist vorgesehen, dass der Frequenztransformator eine Drehstrom-Schleifringläufer-Maschine umfasst, wobei der Drehstrom-Asynchron-Motor mit den Schleifringen der Drehstrom-Schleifringläufer-Maschine verbunden ist. Dies erlaubt einen einfachen Aufbau des Frequenztransformators. Das Stromnetz ist hierbei mit einer Statorwicklung der Drehstrom-Schleifringläufer-Maschine verbunden, um diese mit Strom versorgen zu können. Bevorzugt ist die Drehstrom-Schleifringläufer-Maschine derart angeordnet, dass sich das Drehfeld gegenläufig zur mechanischen Drehrichtung der Welle bewegt.

Alternativ ist bevorzugt vorgesehen, dass der Frequenztransformator zwei Drehstrom-Schleifringläufer-Maschinen umfasst, wobei der Stator einer ersten Drehstrom-Schleifringläufer-Maschine mit dem Stromnetz verbindbar ist, die Schleifringe der ersten Drehstrom-Schleifringläufer-Maschine mit den Schleifringen der zweiten Drehstrom-Schleifringläufer-Maschine verbunden sind und der Stator der zweiten Drehstrom-Schleifringläufer-Maschine mit dem Drehstrom-Asynchron-Motor verbunden ist. Die beiden Rotoren der beiden Drehstrom-Schleifringläufer-Maschinen sind jeweils miteinander und der antreibbaren Welle fest gekoppelt, sodass eine Drehung der Welle eine Drehung beider Rotoren bewirkt. Bei dieser Anordnung wird die Frequenz, mit der der Drehstrom-Asynchron-Motor betrieben wird, durch die zweite Drehstrom-Schleifringläufer-Maschine nochmals verändert, wobei die erste Drehstrom-Schleifringläufer-Maschine eine erste Frequenzänderung (Erste Stufe) bewirkt und die zweite Drehstrom-Schleifringläufer-Maschine eine zweite Frequenzänderung (Zweite Stufe) bewirkt. Die Größe der Frequenzänderung hängt jeweils von der Drehzahl der antreibbaren Welle und der Polzahl der Drehstrom-Schleifringläufer-Maschine ab. Die beiden Drehstrom-Schleifringläufer-Maschinen können so miteinander verbunden sein, dass sich die Frequenzänderungen addieren, also beide Stufen bzw. beide Drehstrom-Schleifringläufer-Maschinen jeweils die Frequenz erhöhen. Hierbei ist eine der Drehstrom-Schleifringläufer-Maschinen derart angeordnet, dass sich das Drehfeld gegenläufig zur mechanischen Drehrichtung der antreibbaren Welle dreht und die andere Drehstrom-Schleifringläufer-Maschine ist derart angeordnet, dass sich das Drehfeld in die gleiche Richtung (gleichläufig) wie die mechanische Drehrichtung der antreibbaren Welle dreht. Bevorzugt ist vorgesehen, dass die erste Drehstrom-Schleifringläufer-Maschine derart angeordnet ist, dass sich das Drehfeld gegenläufig zur mechanischen Drehrichtung der antreibbaren Welle dreht und die zweite Drehstrom-Schleifringläufer-Maschine ist derart angeordnet, dass sich das Drehfeld in die gleiche Richtung (gleichläufig) wie die mechanische Drehrichtung der antreibbaren Welle dreht. Alternativ können sie so miteinander verbunden sein, dass sich die Frequenzänderungen subtrahieren, also nur eine Stufe die Frequenz erhöht, während die andere Stufe die Frequenz reduziert. Dies kann dadurch erzielt werden, indem die beiden Drehstrom-Schleifringläufer-Maschinen derart angeordnet sind, dass sich die Drehfelder jeweils gegenläufig wie die antreibbare Welle bewegen.

Bevorzugt ist vorgesehen, dass die erste Drehstrom-Schleifringläufer-Maschine und die zweite Drehstrom-Schleifringläufer-Maschine die gleiche Polzahl aufweisen. Alternativ ist bevorzugt vorgesehen, dass die erste Drehstrom-Schleifringläufer-Maschine und die zweite Drehstrom-Schleifringläufer-Maschine unterschiedliche Polzahlen aufweisen.

Durch die mögliche Anpassung der Polzahlen und der Drehrichtung der Drehfelder der beiden Drehstrom-Schleifringläufer-Maschinen ergeben sich mehrere Optionen, um die Drehzahl der antreibbaren Welle bzw. die Frequenz des ausgegebenen Stromes an den Schlupf des Drehstrom-Asynchron-Motors anzupassen.

Weiters ist bevorzugt vorgesehen, dass der Frequenztransformator einen Rotationstransformator umfasst, der einen ersten Stator und einen zweiten Stator sowie einen ersten Rotor und einen zweiten Rotor aufweist, wobei die beiden Rotoren mit der Welle fest gekoppelt und miteinander elektrisch verbunden sind, wobei der zweite Stator mit dem Drehstrom-Asynchron-Motor verbunden ist. Die Bauteile des Rotationstransformators, insbesondere beide Statoren und beide Rotoren, sind bevorzugt in einem gemeinsamen Gehäuse angeordnet. Jeder Stator und jeder Rotor weist eine eigene Stator- bzw. Rotorwicklung auf. Die erste Rotorwicklung und die zweite Rotorwicklung sind elektrisch miteinander verbunden. Der erste Stator bzw. die erste Statorwicklung ist mit dem Stromnetz verbunden und der zweite Stator bzw. die zweite Statorwicklung ist mit dem Drehstrom-Asynchron-Motor verbunden. Die Polzahl der ersten Stator-Rotor-Paarung und die Polzahl der zweiten Stator-Rotor-Paarung können gleich oder auch verschieden sein. Die Drehrichtungen der entstehenden Drehfelder können gleich sein oder in entgegengesetzte Richtungen verlaufen. Durch die entsprechende Anpassung der Polzahlen und der Drehfelder der beiden Stator-Rotor-Paarungen kann die Frequenz des der Drehstrom-Asynchron-Maschine zugeführten Stroms bestimmt werden. Im Betrieb arbeitet diese Ausführungsform ähnlich wie die Ausführungsform mit zwei Schleifringläufer-Maschinen. Der erste Stator und der erste Rotor wirken hierbei im Betrieb als erste Stufe, in der die Frequenz des vom Stromnetz erhalten Stromes transformiert wird. Dieser Strom wird anschließend dem zweiten Rotor zugeführt, der zusammen mit dem zweiten Stator als zweite Stufe die Frequenz des Stroms erneut ändert und anschließend dem Drehstrom-Asynchron-Motor zuführt. Ein derartiger Rotationstransformator ist einfacher aufgebaut als ein Frequenztransformator mit zwei Drehstrom-Schleifringläufer-Maschinen, da insbesondere keine Schleifringe nötig sind, und daher robuster und weniger wartungsintensiv.

Die einzelnen Verbindungen, bspw. zwischen dem Stromnetz und dem Frequenztransformator oder zwischen dem Frequenztransformator und dem Drehstrom-Asynchron-Motor, sind bevorzugt über (elektrische) Leitungen ausgebildet, die entsprechend dimensioniert sind. Bevorzugt sind die Leitungen lösbar mit den Maschinen verbunden, um einen einfachen Auf- und Abbau, schnelle Wartungen und eine gute Anpassbarkeit der Verbindungen zu erlauben.

Die erfindungsgemäß angeordneten Maschinen, insbesondere Drehstrom-Schleifringläufer-Maschinen, Drehstrom-AsynchronMotoren und Drehstrom-Synchron-Generatoren können durch für sich bekannte, entsprechend dimensionierte und ausgebildete Maschinen verwirklicht sein.

Weiters ist ein erfindungsgemäßes Verfahren zur Umwandlung von Bewegungsenergie in elektrische Energie vorgesehen, bei welchem der Stator eines Frequenztransformators mit einem Stromnetz verbunden ist und der Rotor des Frequenztransformators mit einer angetriebenen Welle verbunden ist, wodurch der Rotor gedreht wird, wobei ein Drehstrom-Asynchron-Motor vom Frequenztransformator mit Energie versorgt wird, sodass sich ein Rotor des Drehstrom-Asynchron-Motors dreht, wodurch ein mit dem Rotor des Drehstrom-Asynchron-Motors verbundener Rotor eines Drehstrom-Synchron-Generator gedreht wird und die dabei generierte Energie dem Stromnetz zugeführt wird. Das erfindungsgemäße Verfahren wird bevorzugt mit einer erfindungsgemäßen Vorrichtung durchgeführt.

Um die erfindungsgemäße Vorrichtung an das zu versorgende Stromnetz anzuschließen, ohne große Einschaltstromspitzen zu erzeugen, ist bevorzugt vorgesehen, dass in einem ersten Schritt der Drehstrom-Asynchron-Motor und der Drehstrom-Synchron-Generator auf die Synchrondrehzahl gebracht werden, indem der Stator des Frequenztransformators bei stehender antreibbarer Welle ans Stromnetz geschaltet wird. Anschließend wird der Frequenztransformator mit dem Drehstrom-Asynchron-Motor verbunden, sodass dieser und damit der Drehstrom-Synchron-Generator mit geringer Spannung langsam anlaufen. Sobald der Drehstrom-Asynchron-Motor und der Drehstrom-Synchron-Generator die Synchrondrehzahl fast erreicht haben, wird der Drehstrom-Synchron-Generator ans Stromnetz angeschlossen und die Synchrondrehzahl erreicht. Anschließend kann die antreibbare Welle gedreht werden, bspw. indem eine mit der Welle verbundene Turbine gestartet wird.

Bei der erfindungsgemäßen Vorrichtung bzw. zur Durchführung des erfindungsgemäßen Verfahrens werden keine wartungsintensiven Zahnradgetriebe und keine Leistungselektronik benötigt. Es sind lediglich wenige und robuste Geräte, insbesondere der Frequenztransformator, an exponierter Stelle vorgesehen. Der Umformersatz, bestehend aus Drehstrom-Asynchron-Motor und Drehstrom-Synchron-Generator können vom Frequenztransformator und der antreibbaren Welle beabstandet angeordnet sein, bspw. im Sockel eines Windrades, während der Frequenztransformator in der Gondel angeordnet ist. Dies erleichtert die Wartung und erhöht die Robustheit des Systems. Der Drehstrom-Synchron-Generator kann induktive Blindleistung erzeugen und lässt sich leicht über die Erregung durch die Turbine steuern. Während eines kurzen Ausfalls des Netzes kann er weiterlaufen, was die Synchronisation bei Netzwiederkehr erleichtern kann.

Die erfindungsgemäße Vorrichtung bzw. das erfindungsgemäße Verfahren sind insbesondere geeignet für den Einsatz in einem starren Netz, können aber auch für den Inselbetrieb genutzt werden.

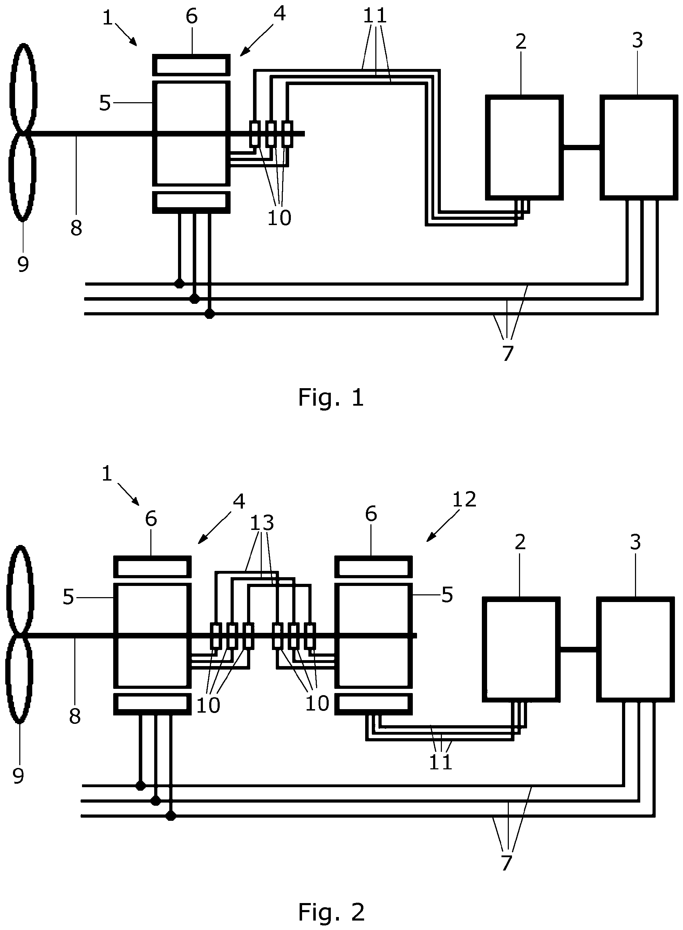

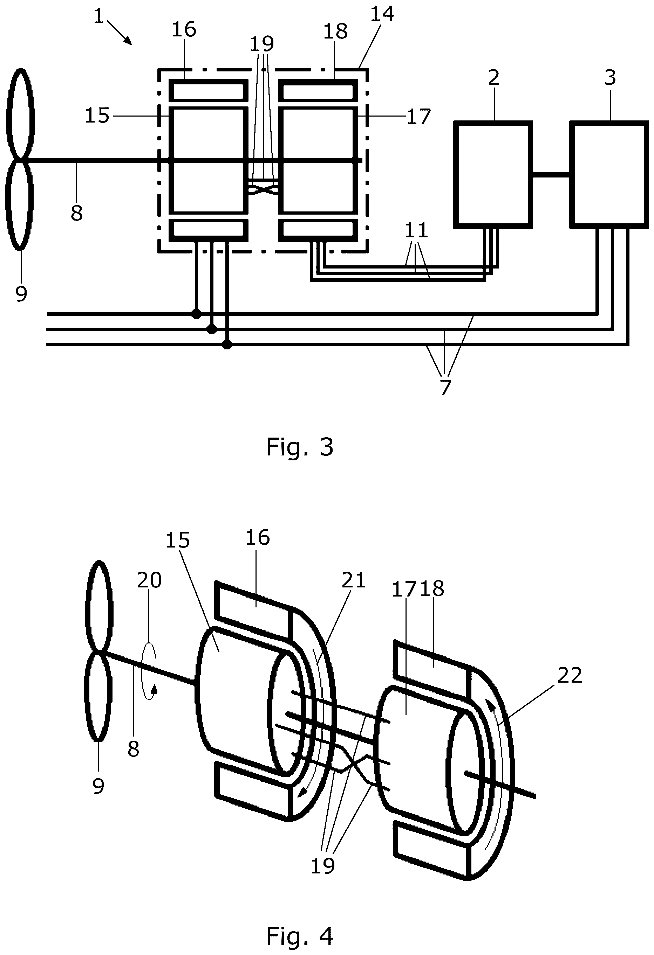

Die Erfindung wird nachfolgend anhand eines in der Zeichnung schematisch dargestellten Ausführungsbeispiels näher erläutert. In dieser zeigt Fig. 1 eine Darstellung einer ersten Ausführungsform einer erfindungsgemäßen Vorrichtung, Fig. 2 eine Darstellung einer zweiten Ausführungsform einer erfindungsgemäßen Vorrichtung, Fig. 3 eine Darstellung einer dritten Ausführungsform einer erfindungsgemäßen Vorrichtung und Fig. 4 einen Teil der Vorrichtung gemäß Fig. 3 in einer perspektivischen Ansicht.

In Fig. 1 wird eine erste Ausführungsform einer erfindungsgemäßen Vorrichtung gezeigt, umfassend einen Frequenztransformator 1, einen Drehstrom-Asynchron-Motor 2 und einen Drehstrom-Synchron-Generator 3. Der Frequenztransformator 1 umfasst eine Drehstrom-Schleifringläufer-Maschine 4, die einen Rotor 5 sowie einen Stator 6 aufweist, wobei der Stator 6 mit einem Stromnetz 7 verbunden ist. Der Rotor 5 ist fest mit einer antreibbaren Welle 8 gekoppelt, die ihrerseits mit einer Turbine 9, bspw. eine Wind- oder Wasserturbine, verbunden ist. Die Schleifringe 10 der Drehstrom-Schleifringläufer-Maschine 4 sind über Leitungen 11 mit dem Drehstrom-Asynchron-Motor 2 verbunden. Der Rotor des Drehstrom-Asynchron-Motors 2 ist fest mit dem Rotor des Drehstrom-Synchron-Generators 3 verbunden und der Stator des Drehstrom-Synchron-Generators 3 ist mit dem Stromnetz 7 verbunden, um dieses im Betrieb mit Strom zu versorgen. Die Polzahl des Drehstrom-Asynchron-Motors 2 und die Polzahl des Drehstrom-Synchron-Generators 3 sind bevorzugt gleich.

Im Betrieb wird die Turbine 9 und damit die Welle 8 langsam gedreht, bspw. durch Wasser- oder Windkräfte. Hierdurch wird die Phasenlage zwischen dem am Stator 6 eingespeisten Strom, der bspw. eine Frequenz von 50 Hz oder 60 Hz aufweist, und dem an den Schleifringen 10 abgenommenen Strom verändert, sodass die Frequenz des über die Schleifringe 10 dem Drehstrom-Asynchron-Motor 2 zugeführten Stromes im Vergleich zur Spannung des Stromnetzes erhöht ist und bspw. 51 Hz oder 61 Hz beträgt. Die Welle 8 und das Drehfeld in der Drehstrom-Schleifringläufer-Maschine 4 drehen sich gegenläufig, also in entgegengesetzte Richtungen. Hiermit wird der Rotor des Drehstrom-Asynchron-Motors 2 gedreht, wobei der Frequenzunterschied zwischen dem über die Schleifringe 10 zugeführten Strom und der Netzfrequenz den Schlupf des Drehstrom-Asynchron-Motors 2 definiert. Durch die Drehung des Rotors des Drehstrom-Asynchron-Motors 2 wird auch der fest gekoppelte Rotor des Drehstrom-Synchron-Generators 3 gedreht und die kinetische Energie der Drehung in Strom mit Netzfrequenz umgewandelt, die in das Stromnetz 7 eingespeist wird.

In Fig. 2 wird eine zweite Ausführungsform einer erfindungsgemäßen Vorrichtung gezeigt. Im Unterschied zur Ausführung gemäß Fig. 1 ist der Frequenztransformator 1 durch eine erste Drehstrom-Schleifringläufer-Maschine 4 und eine zweite Drehstrom-Schleifringläufer-Maschine 12 gebildet. Die Drehstrom-Schleifringläufer-Maschinen 4,12 weisen jeweils einen Rotor 5 und einen Stator 6 auf. Das Stromnetz 7 ist mit dem Stator 6 der ersten Drehstrom-Schleifringläufer-Maschine 4 verbunden. Weiters sind die Schleifringe 10 der ersten Drehstrom-Schleifringläufer-Maschine 4 mit den Schleifringen 10 der zweiten Drehstrom-Schleifringläufer-Maschine 12 über Leitungen 13 miteinander verbunden.

In der ersten Drehstrom-Schleifringläufer-Maschine 4 wird die Frequenz des Stromnetzes 7 wie bei Fig. 1 beschrieben transformiert und über die Schleifringe 10 abgegeben. Bei der Ausführung gemäß Fig. 2 wird dieser Strom mit der veränderten Frequenz, insbesondere einer erhöhten Frequenz, dem Rotor 5 einer zweiten Drehstrom-Schleifringläufer-Maschine 12 zugeführt, wodurch aufgrund der Drehung der Welle 8 und des zugeführten Stromes ein Drehfeld entsteht und Strom mit erneut veränderter Frequenz durch Induktion auf den Stator 6 übertragen wird. Der am Stator 6 auftretende Strom weist eine geänderte Frequenz auf, die je nach Anordnung der Drehrichtung des Drehfeldes der zweiten Drehstrom-Schleifringläufer-Maschine 12 eine höhere oder niedrigere Frequenz als der am Rotor 5 der zweiten Drehstrom-Schleifringläufer-Maschine 12 anliegende Strom aufweist. Dieser Strom mit einer höheren Frequenz als die Netzfrequenz wird nunmehr dem Drehstrom-Asynchron-Motor 2 zugeführt, wodurch der Drehstrom-Synchron-Generator 3 angetrieben und Strom in das Stromnetz 7 eingespeist wird.

In Fig. 3 ist eine dritte Ausführungsform einer erfindungsgemäßen Vorrichtung dargestellt. Im Unterschied zur Ausführung gemäß Fig. 1 bzw. 2 ist der Frequenztransformator 1 durch einen Rotationstransformator 14 gebildet, umfassend einen ersten Rotor 15, der mit einem ersten Stator 16 zusammenwirkt, und einen zweiten Rotor 17, der mit einem zweiten Stator 18 zusammenwirkt. Der erste Rotor 15 und der zweite Rotor 17 sind über Leitungen 19 miteinander verbunden, sodass Strom vom ersten Rotor 15 zum zweiten Rotor 17 fließen kann. Weiters sind beide Rotoren 15,17 mit der Welle 8 fest gekoppelt. Der erste Stator 16 ist mit dem Stromnetz 7 verbunden und der zweite Stator 18 ist mit dem Drehstrom-Asynchron-Generator 2 verbunden, um diesen mit Strom zu versorgen.

Im Betrieb wirkt diese Ausführungsform ähnlich wie die in Fig. 2 beschriebene Ausführungsform. Der erste Stator 16 und der erste Rotor 15 wirken hierbei als erste Stufe, in der die Frequenz des vom Stromnetz 7 erhalten Stromes transformiert wird. Dieser Strom wird anschließend dem zweiten Rotor 17 zugeführt, der zusammen mit dem zweiten Stator 18 als zweite Stufe die Frequenz des Stroms erneut ändert und anschließend dem Drehstrom-Asynchron-Motor 2 zuführt.

In Fig. 4 ist ein Detail der Ausführungsform gemäß Fig. 3 in einer perspektivischen Ansicht gezeigt. Insbesondere ist die mechanische Drehrichtung der durch die Turbine 9 antreibbaren Welle 8 mit 20 bezeichnet. Bei dieser Ausführung sind die beiden Rotoren 15,17 so miteinander verbunden, dass das erste Drehfeld 21 im ersten Stator 16 der mechanischen Drehrichtung 20 der Welle 8 entgegengesetzt ist (gegenläufig) und das zweite Drehfeld 22 im zweiten Stator 18 in Richtung der mechanischen Drehrichtung 20 der Welle 8 verläuft (gleichläufig). Alternativ können die beiden Rotoren 15,17 auch so miteinander verbunden sein, dass die Drehfelder 21,22 in die gleiche Richtung laufen.

## Patentansprüche

1. Vorrichtung zur Umwandlung von Bewegungsenergie in elektrische Energie, umfassend einen Frequenztransformator (1), der zumindest einen Stator (6,16,18) und einen Rotor (5,15,17) aufweist, einen Drehstrom-Asynchron-Motor (2) sowie einen Drehstrom-Synchron-Generator (3), der mit einem Stromnetz (7) verbindbar ist, wobei zumindest ein Stator (6,16,18) des Frequenztransformators (1) mit dem Stromnetz (7) verbindbar ist, der Rotor (5,15,17) des Frequenztransformators (1) mit einer antreibbaren Welle (8) verbunden ist, und der Frequenztransformator (1) derart mit dem Drehstrom-Asynchron-Motor (2) verbunden ist, dass der Drehstrom-Asynchron-Motor (2) durch den Frequenztransformator (1) antreibbar ist, wobei ein Rotor des Drehstrom-Asynchron-Motors (2) fest mit einem Rotor des Drehstrom-Synchron-Generators (3) verbunden ist.

2. Vorrichtung nach Anspruch 1, **dadurch gekennzeichnet, dass** der Frequenztransformator (1) eine Drehstrom-Schleifringläufer-Maschine (4) umfasst, wobei der Drehstrom-Asynchron-Motor (2) mit den Schleifringen (10) der Drehstrom-Schleifringläufer-Maschine (4) verbunden ist.

3. Vorrichtung nach Anspruch 1, **dadurch gekennzeichnet, dass** der Frequenztransformator (1) zwei Drehstrom-Schleifringläufer-Maschinen (4,12) umfasst, wobei der Stator (6) einer ersten Drehstrom-Schleifringläufer-Maschine (4) mit dem Stromnetz (7) verbindbar ist, die Schleifringe (10) der ersten Drehstrom-Schleifringläufer-Maschine (4) mit den Schleifringen (10) der zweiten Drehstrom-Schleifringläufer-Maschine (12) verbunden sind und der Stator (6) der zweiten Drehstrom-Schleifringläufer-Maschine (12) mit dem Drehstrom-Asynchron-Motor (2) verbunden ist.

4. Vorrichtung nach Anspruch 3, **dadurch gekennzeichnet, dass** die erste Drehstrom-Schleifringläufer-Maschine (4) und die zweite Drehstrom-Schleifringläufer-Maschine (12) die gleiche Polzahl aufweisen.

5. Vorrichtung nach Anspruch 3, **dadurch gekennzeichnet, dass** die erste Drehstrom-Schleifringläufer-Maschine (4) und die zweite Drehstrom-Schleifringläufer-Maschine (12) unterschiedliche Polzahlen aufweisen.

6. Vorrichtung nach Anspruch 1, **dadurch gekennzeichnet, dass** der Frequenztransformator (1) einen Rotationstransformator (14) umfasst, der einen ersten Stator (16) und einen zweiten Stator (18) sowie einen ersten Rotor (15) und einen zweiten Rotor (17) aufweist, wobei die beiden Rotoren (15,17) mit der Welle (8) fest gekoppelt und miteinander elektrisch verbunden sind, wobei der zweite Stator (18) mit dem Drehstrom-Asynchron-Motor (2) verbunden ist.

7. Vorrichtung nach einem der Ansprüche 1 bis 6, **dadurch gekennzeichnet, dass** der Drehstrom-Asynchron-Motor (2) und der Drehstrom-Synchron-Generator (3) die gleiche Polzahl aufweisen.

8. Verfahren zur Umwandlung von Bewegungsenergie in elektrische Energie, bei welchem der Stator (6,16,18) eines Frequenztransformators (1) mit einem Stromnetz (7) verbunden ist und der Rotor (5,15,17) des Frequenztransformators (1) mit einer angetriebenen Welle (8) verbunden ist, wodurch der Rotor (5,15,17) gedreht wird, wobei ein Drehstrom-Asynchron-Motor (2) vom Frequenztransformator (3) mit Energie versorgt wird, sodass sich ein Rotor (5,15,17) des Drehstrom-Asynchron-Motors (2) dreht, wodurch ein mit dem Rotor des Drehstrom-Asynchron-Motors (2) verbundener Rotor eines Drehstrom-Synchron-Generator (3) gedreht wird und die dabei generierte Energie dem Stromnetz (7) zugeführt wird.
